(19) Europäisches Patentamt
European Patent Office
Office européen des brevets

(11) **EP 1 935 662 A1**

(12) **EUROPEAN PATENT APPLICATION**

(43) Date of publication:
**25.06.2008 Bulletin 2008/26**

(51) Int Cl.:
*B41M 7/00* (2006.01)    *B41M 7/02* (2006.01)
*C09D 11/02* (2006.01)    *C09D 11/10* (2006.01)

(21) Application number: **06126311.7**

(22) Date of filing: **18.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Siegwerk Benelux NV**
**2880 Bornem (BE)**

(72) Inventors:
• **Arnaud, Samuel**
**74100 Annemasse (FR)**

• **Magrez, Murielle**
**74440 Mieussy (FR)**
• **Larvor, Marc**
**74200 Allinges (FR)**
• **Noirot, Pierre-Antoine**
**74800 Arenthon (FR)**
• **Catherin, Gilles**
**01630 Saint Genis Pouilly (FR)**

(74) Representative: **Welch, Andreas et al**
**Hepp Wenger Ryffel AG**
**Friedtalweg 5**
**9500 Wil (CH)**

(54) **Ink for in-line varnishing process**

(57) The present invention is related to the use of use of a traditional offset ink in an in-line varnishing process, said ink having a setting speed ratio of lower than 40%, and a contact angle of lower than 28°, in an in-line varnishing process for manufacturing an article. More particularly, said traditional offset ink comprises a phenolic-modified rosin ester, a vegetable ester as a solvent, an organic pigment, a drier and optionally additives. The present invention is also related to a process for manufacturing an article in an in-line varnishing process, said process comprising the steps of applying said traditional offset ink on at least one surface of a substrate by means of an offset-printing process, applying onto the wet ink layer of said offset ink a lacquer layer forming composition, and curing said lacquer layer by means of UV radiation.

EP 1 935 662 A1

**Description**

This invention relates to a new coating for substrates such as board packages which is obtainable by the use of a specific offset ink in an in-line varnishing process, and to a process of varnishing substrates in line.

Packaging materials such as board packages are commonly printed by means of the offset printing process. This process is particularly suitable for such type of substrates since due to the indirect transfer of the ink from the printing plates to the substrate the rather sensitive plates do not come into direct contact with the rough surface of the substrate, resulting in a longer serviceability of the printing machines.

It is pointed out that the present invention is only related to traditional offset inks and not to UV curable inks. UV curable inks are used for in line varnishing processes since they can be cured with radiation before varnishing. However, for certain applications the use of UV curable inks is not advisable due to the higher costs involved with the use of UV curable inks. Therefore, in the context of the present invention, the term "traditional offset ink" comprises any offset inks which are not UV curable offset inks.

Traditional offset Inks to be used in an offset-printing process have to meet certain criteria. In order to allow good printing, those inks should be viscous and adhesive, i.e. providing a certain tack, without solidifying within the printing machine. In general, traditional offset inks are composed of a pigment which is not soluble in the wetting medium used in the offset-printing process, a binder which is soluble in the solvent used in the ink and is preferably a hard resin such as a rosin resin, a film forming agent such as linseed oil or alkyd resins providing mechanical resistance to the final print, a solvent such as a mineral oil which should readily evaporate from the final print or penetrate into the substrate, as well as certain other additives.

Once printed, substrates such as board packages are frequently overprinted with a lacquer layer in order to achieve several effects. On the one hand, that lacquer layer is designed to protect the underlying print against environmental influences. On the other hand, by means of said overlying lacquer layer the visual effects of the print are enforced by providing a glossy or matt effect.

For the lacquer layer there can be used various compositions. Preferred are lacquers which can be cured by means of ultraviolet (UV) radiation, such as lacquers being composed of acrylated species. In order to achieve the increase of the gloss of the print the varnish must not be too viscous. However, when applied to a porous material, with low viscosity varnishes a problem of soak-in can arise. Also, the glueability and scuff and rub resistance of the varnish have to be chosen in dependence of the properties the final coating consisting of the print and the lacquer layer should exhibit. To meet this criteria, several varnish formulations are known in the art. A common formulation for a UV-curable varnish comprises, for example, one or a mixture of several acrylate resins such as bisphenol A epoxy acrylate resin and benzophenone as a photoinitiator.

There are several methods known in the art how the UV-curable varnish can be applied to the printed substrate. The majority of UV varnishing is carried out through a varnishing unit with an anilox roller. Also, varnishing via a dry-offset method is used. Usually the lacquer layer is applied to the printed substrate several hours after the traditional offset ink has been printed onto the substrate. This means that the ink is given a sufficient amount of time to dry, for example by evaporation of the solvent or by absorption of the solvent. Therefore, the lacquer layer is applied on a dry layer of ink, i.e. on a hard surface. This usually leads to good results with respect to the visual characteristics of the printed substrate, i.e. the final gloss is high and independent on the ink density variation across several areas of the print. Most of the time, the lacquer layer is applied on presses only dedicated to such varnishing operations. This process is called "off-line process".

Such an off-line process suffers from the disadvantage that the time required for conducting the entire process is rather long, due to the need to wait for the drying of the ink layer of a traditional offset ink. As a consequence, the productivity of said process is not very good. Therefore, it has been thought to apply the lacquer layer directly after the traditional offset ink has been applied onto the substrate in a single operation. Such a process is called "in-line process". Needless to say, the in-line process promises a much higher productivity than the off-line process due to the much shorter period of time required to finish a desired product. In an in-line process, the lacquer layer is applied on an ink layer of a traditional offset ink which is still wet (wet-on-wet process).

However, such an in-line process suffers from a severe drawback. The resulting gloss of the printed product is very uneven and shows a wide variation over different shades. Usually, the gloss of a product manufactured according to a wet-on-wet process is high on areas containing only a small amount of traditional offset ink, i.e. unprinted or low-printed areas, whereas the gloss is low on areas containing a large amount of traditional offset ink, such as dark hairs and shadows. The difference in gloss between those areas is so large that the overall visual effect of the printed product is not satisfactory and far from meeting the end-user requirements. For example, on areas containing a large amount of traditional offset ink the gloss may decrease by around 50% in comparison to the gloss exhibited by areas containing only a small amount of traditional offset ink.

It has been suggested to apply a water-based primer just after the ink and before the varnish in order to make the layer to which the varnish is to be applied more uniform. However, this requires an additional step and additional components and is therefore not favourable.

In EP-A-1 333 073, a process for in-line varnishing was described. In said process, a combination of a specific offset ink comprising a particular solvent and of a lacquer comprising a photoinitiator which is poorly soluble in said solvent was used. However, said process did not fulfil all the requirements imposed on an in-line varnishing process.

It was the object of the present invention to provide an improved process for in-line varnishing.

The above object has been surprisingly solved by the use of a traditional offset ink in an in-line varnishing process, said ink having a setting speed ratio of lower than 40%, and a contact angle of lower than 28°.

According to the present invention, the term "setting speed ratio" is defined as follows:

$$\text{setting speed ratio (\%)} = \frac{\text{optical density of the ink measured 20s after printing} \cdot 100}{\text{initial optical density of the ink measured immediately after printing}}$$

wherein a load of 1.8 to 2 g/m$^2$ ink is printed onto a Invercoat G coated paper (240 g/m$^2$, from INAPA group Iggesund paperboard). The load of the ink is calculated by subtracting the weight of the inking roller after printing from the weight of the inking roller before printing and dividing it by the area of the surface of the printed layer. Optical density values are measured with a common densiometer (a well-known device). Further details of the determination of the setting speed ratio are given in the example section.

According to the present invention, the term "contact angle" is defined as the value obtained by depositing a liquid droplet of TMPTA (Trimethylolpropane triacrylate) having a weight between 0.0065 and 0.0085 g onto the surface of a just printed ink layer having a thickness of between 35 and 40 $\mu$m, and measuring the contact angle, i.e. the angle between the surface of the ink layer and the liquid droplet with a standard contact angle goniometer 20 s after printing. Further details of the determination of the contact angle value are given in the example section.

According to a preferred embodiment, said ink comprises a phenolic-modified rosin ester, a vegetable ester as a solvent, an organic pigment, a drier and optionally additives such as wax. Such an ink provides a very fast setting speed as well as a good compatibility with an UV varnish (or lacquer) to be applied in-line.

It was surprisingly found that the inks of the present invention provide for high gloss of the UV varnish applied on top of said ink. This is due to the fact that the inks of the present invention exhibit, at the same time, a very fast setting speed and a very good compatibility with the UV varnish. It was found for the first time that the drawbacks hitherto observed in in-line varnishing applications as described above can be overcome if an ink is used which simultaneously satisfy the criteria of fast setting speed and low contact angle value.

With an ink exhibiting a very fast setting speed it is achieved that the solvent in the ink vehicle penetrates very quickly into the substrate. According to the present invention, the terms diluent and solvent shall have the same meaning. Once a sufficient amount of solvent has penetrated into the substrate, the applied ink layer will exhibit a stabilized surface. Thereby, heterogeneities at the interface of ink and UV varnish are avoided which would result from applying the UV varnish layer onto a not set ink layer which still has a moving surface. These heterogeneities would result in a lower and worse gloss. According to the present invention, a setting speed ratio as defined above of lower than 40%, preferably lower than 30% and even more preferably lower than 20% is necessary in order to render an ink suitable for the in-line varnishing process of the present invention.

In addition, it was found that the UV varnish should exhibit a good levelling on the wet offset ink layer. This is achieved if the ink and the UV varnish have a good compatibility to each other. This compatibility is defined according to the present invention by the contact angle value, which indicates the spreading of a droplet of the monomer TMPTA (Trimethylolpropane triacrylate) on the surface of a printed ink layer. TMPTA is a monomer which is commonly used in UV varnishes. The contact angle value is the angle between the surface of the just printed ink layer and the liquid droplet of TMPTA applied thereto, as measured after 20s as described above. According to the present invention, a contact angle value as defined above of lower than 28°, preferably lower than 25° is necessary in order to render an ink suitable for the in-line varnishing process of the present invention.

According to the present invention, it is crucial that both parameters are fulfilled at the same time, i.e. the ink has to possess a setting speed ratio as defined above of lower than 40% and simultaneously a contact angle value as defined above of lower than 28°.

Conventional offset inks formulated with mineral oils as solvents usually show a satisfactory setting speed ratio. However, these inks fail to provide the required good compatibility with the UV varnish, i.e. they do not exhibit sufficiently low contact angle values. Conventional offset inks formulated with mineral oils as diluents/solvents are nonpolar and do therefore not show the necessary good compatibility with the polar UV varnishes.

According to the present invention, it was found that if the mineral oils commonly used in such inks are replaced by more polar solvents in combination with a polar binder, an ink having the required fast setting speed and simultaneously the required low contact angle may be obtained. According to the present invention, a preferred embodiment involves an ink comprising a phenolic-modified rosin ester as a binder and a vegetable ester as a solvent.

Phenolic-modified rosin esters in their different grades and their manufacture are well-known in the art. While in principle any phenolic-modified rosin ester may be used, according to the present invention it is preferred to use phenolic-modified rosin esters with a very high polarity.

Vegetable esters are well-known to the skilled man. According to the present invention, any vegetable ester may be used. According to a preferred embodiment, an ester of rapeseed oil (9-octadecenoic acid) is used in the offset printing ink.

A combination of a phenolic-modified rosin ester and a vegetable ester results in a particularly preferred printing ink which provides both a very fast setting speed and a good compatibility with UV-varnishes conventionally used in said field. In contrast thereto, an offset ink comprising a mineral oil distillate as solvent component, similar to the ones described in EP-A-1 333 073, showed much less compatibility with conventional UV varnishes.

The traditional offset inks according to the present invention furthermore comprise an organic pigment. It has been found that organic pigments do not adversely influence the good compatibility of the ink provided by the above combination of resin and solvent.

Any organic pigment conventionally used in offset inks may be considered for the purpose of the present invention.

The offset inks which are preferred according the present invention are mainly composed of an ink vehicle which comprises said phenolic-modified rosin resin and said vegetable ester, and said organic pigment. According to a particularly preferred embodiment, said ink comprises 65 to 90 wt.-% of a combination of said resin and said vegetable ester and 10 to 35 wt.-% of said pigment.

As a further component, one or more driers are present in the offset ink used according to the present invention. Those driers aid in the oxidative drying of the ink film. Although any conventional drier for offset inks may be used, according to the present invention acrylates and more preferred octoates are chosen. According to a particular preferred embodiment, said drier is a metal octoate selected from the group consisting of cobalt octoate and manganese octoate, or a mixture thereof. The offset inks used according to the present invention typically comprise 0.2 to 1.5 wt.-% of said one or more drier components.

Moreover, in the offset ink used according to the present invention additives which are conventionally used in offset inks may be included. Examples are rheology modifiers such as gelling agents, antioxidants or waxes. Those additives are used in the typical amounts in which they are used in conventional offset inks.

For example, in order to provide good slip characteristics, scratch and rub resistance to the final traditional offset ink, the traditional offset inks of the invention may further contain a wax component in the grinding medium. Any commonly used wax can also be incorporated into the traditional offset inks of the invention. Examples are polyethylene, polytetrafluoroethylene or synthetic paraffine waxes. An especially preferred wax according to the present invention is a micronised polyethylene/Fischer-Tropsch wax, i.e. a synthetic wax, which is sold under the trade name Polysperse by Eastman.

In order to reduce the potential of the traditional offset ink to form skins while being in a storing container, the traditional offset inks of the invention preferably contain in the grinding medium a little amount of an anti-oxidant. Since an anti-oxidant adversely influences the drying properties of the traditional offset ink, only a very little amount thereof should be included. Preferably, the amount of anti-oxidant in the final traditional offset ink should not exceed 2 %, more preferably lie in a range of from 0,1 to 1,5 % by weight, based on the weight of the entire final traditional offset ink. Any commonly used anti-oxidant may be included into the traditional offset inks of the invention. Examples are Oximes such as methyl ethyl ketoxime, substituted phenols such as butylated hydroxy toluene, or Quinones such as hydroquinone. From those compounds, Quinones and especially hydroquinone derivatives are the most preferred ones according to the present invention.

The offset inks to be used according to the present invention may be obtained by mixing the individual components under conventional conditions.

Offset inks as they are useful for the present invention are known in the art. For example, in US-5,178,672, similar offset inks are described. However, up to now it has not been known that such offset inks may be used in an in-line varnishing process for the manufacture of printed articles.

The in-line varnishing process of the present invention is carried out as known in the art on equipment commonly used for that process.

Thus, in a first step, the desired substrate is printed on at least one of its surfaces by means of an offset-printing process, frequently also called lithographic printing process. Any of the commonly used offset-printing processes such as the web or sheet-fed process can be used for the process according to the present invention. Reference is made in this respect to The Printing ink manual, R.H. Leach (ed.), 5th ed., Blueprint, London 1993, p. 15-33, the content of which is incorporated herewith by reference. In the process according to the present invention, the substrate may be printed with one single traditional offset ink or with various different traditional offset inks, as known in the art. In the process according to the present invention, printing with up to six different colours is preferred.

The above described traditional offset ink is applied in a first step by means of an offset printing process mentioned above to a desired substrate. Although board package, i.e. carton board, is the substrate which is the most preferred one according to the present invention, it is understood that any other substrate commonly printed by means of an offset-printing process, such as paper or metal, can be used in the process according to the present invention. According to the present invention, either one or any of the surfaces of the substrate may be printed.

The printed substrates are overprinted with a lacquer layer in order to achieve several effects. On the one hand, that lacquer layer is designed to protect the underlying print against environmental influences. On the other hand, by means of said overlying lacquer layer the visual effects of the print are enforced by providing a glossy or matt effect.

The present invention only deals with UV curable lacquer layers. Such lacquer layers are described in the art, for example in The Printing ink manual, R.H. Leach (ed.), 5th ed., Blueprint, London 1993, p. 636-677, the content of which is incorporated herewith by reference.

There are known several methods to apply the lacquer layer onto the printed substrate, such as by means of a varnishing unit having preferably anilox rollers, by means of roller coating, by means of a coating head, by means of a dry-offset method either via the damping system or via a printing plate or by means of lithography of letterpress, the dry-offset method being the most commonly used process. The above application methods can be carried out by using one of the printing units, or by utilising so-called in-line end-of-the press coating heads. According to the present invention, any of the above methods for applying the lacquer layer onto the printed substrate may be used.

In the process according to the present invention, the lacquer layer is applied in-line directly after the substrate has been printed via an offset-printing process. Directly in this respect means that the traditional offset ink is not given a sufficient amount of time to dry after being applied to the substrate, so that the lacquer layer is applied onto the printed substrate while the traditional offset ink is still wet. Therefore, the process according to the present invention may be described as a wet-on-wet coating process. If more than one surface of the substrate have been printed in the first step, then any of the printed surfaces is coated with the lacquer layer.

According to the present invention, any UV-curable varnish composition commonly used in this field may be used for generating the lacquer layer of the products of the invention. The composition can be readily chosen by the man skilled in the art in view of the end-user requirements imposed on the product to be made. Thus, a UV-curable varnish composition useful in the present invention comprises a prepolymer, a diluent, a photoinitiator, a co-initiator, and optionally additives such as surfactants, waxes or perfumes.

The prepolymer component will polymerise upon radiation with UV light. Although cationic polymerising species are known, commonly free radical polymerising prepolymers are the most frequently used components in this field and also preferred according to the present invention. Any of the known prepolymers can be considered for the purposes of this invention. The most preferred species are acrylated species such as epoxy acrylates, polyurethane acrylates or polyester acrylates.

In order to adjust the viscosity of the composition or to solubilise the prepolymer, preferably diluents are added thereto. Useful for this purpose are non-reactive diluents which either penetrate into the substrate after the application of the lacquer layer or remain in said layer serving as plasticisers. Examples for such diluents are high boiling esters, highly branched alcohols or alkyl phosphates. However, according to the present invention more preferably used are diluents which have functional groups giving them the ability to participate in the polymerisation process by serving as co-polymers. Useful for this purpose are monofunctional monomers such as isodecyl acrylate (IDA) or phenoxy ethyl acrylate (PEE), difunctional monomers such as 1-4-butane diol diacrylate (BDDA), poylethylene gylcol diacrylate (PEGDA) or tripropylene glycol diacrylate (TPGDA), trifunctional monomers such as pentaerythritol triacrylate (PETA) or trimethylol propane triacrylate (TMPTA) or monomers on the basis of glycerol, or higher functional monomers on the basis of acrylate moieties. According to the present invention, trifunctional monomers such as TMPTA are particularly preferred.

As the photoinitiator, commonly species which readily undergo a Norrish I or Norrish II defragmentation upon being irradiated with UV light are used in the field. For species undergoing primarily a Norrish II defragmentation, it is necessary to add a co-initiator in order to ascertain the efficiency of the photoinitiator. Hydrogen donors are frequently used for that purpose, and any compound having sufficiently acidic H atoms will be considered by the man skilled in the art. Examples are amines such as tertiary or secondary amines, for example N-methyl diethanolamine (MDEA).

As mentioned above, the UV-curable varnish composition of the invention may further comprise additives such as surfactants, waxes or perfumes, which are commonly known to the man skilled in the art.

According to a preferred embodiment of the present invention, the UV-curable varnish composition comprises between 15 to 30 % by weight, preferably 18 to 25 % by weight, based on the weight of the entire UV-curable varnish composition, of the prepolymer; between 40 to 70 % by weight, preferably between 50 and 70 % by weight, based on the weight of the entire UV-curable varnish composition, of the diluent; between 1 to 10 % by weight, preferably between 2 and 7 % by weight, based on the weight of the entire UV-curable varnish composition, of the photoinitiator(s); between 1 to 10 % by weight, preferably between 5 to 10 % by weight, based on the weight of the entire UV-curable varnish composition, of the co-initiator; and the balance of additives such as surfactants or perfumes.

The ingredients of the UV-curable varnish composition are mixed together at room temperature until a complete dissolution of the photoinitiators in the medium has taken place. The thus prepared UV-curable varnish composition can be applied as described above onto the desired substrate.

After the UV-curable varnish composition has been applied as described above onto the substrate, curing is carried out according to any conventional method known to the man skilled in the art. For example, as a source for UV radiation may be used a mercury vapour lamp, either of the high pressure, medium pressure or low pressure type, the medium pressure type being the most preferred one. The lamp is fitted in a short distance above the target to be irradiated at some convenient position.

The products obtained by the in-line printing and varnishing process according to the present invention exhibit a significantly reduced variation of gloss between printed and not printed parts of the surface in comparison to products obtained in an-line process by not using the specific traditional offset inks and UV-curable varnish compositions.

The above offset-ink and the above UV varnish used for the above described in-line varnishing process can also be used for other applications, for example for a double-coating application. In a double-coating application, the ink layer is first applied to a substrate, thereafter another layer such as a layer of waterborne varnish is applied to the ink layer, followed by the application of a UV varnish on said another layer.

## **Examples**

The present invention will now be explained in more detail with reference to non-limiting examples. Unless indicated otherwise, any amounts are given as weight percent.

### Example 1: Preparation of a yellow ink

45.00 wt.-% of a vegetable ester (9-octadecenoic acid methyl ester, sold by Novance under the trade name Estorob 926.65) and 55 wt.-% of a phenolic-modified rosin ester (Bremapal VP 1638 by Kraemer) were mixed each other at 180°C for 45 min (to dissolve the rosin ester in the diluent -vegetable ester-) in order to obtain a varnish for the inks of the present invention.

75.80 wt.-% of said varnish were mixed at ambient temperature with additional 8.10 wt.-% of the above vegetable ester (9-octadecenoic acid methyl ester, sold by Novance under the trade name Estorob 926.65), 0.50 wt.-% of the drier cobalt octoate (10%, sold by Ingfer Filt & Minerals), 0.90 wt.-% of the drier manganese octoate (10%, sold by Ingfer Filt & Minerals), and 1.00 wt.-% of the anti-oxidant mono-t-butylhydroquinone (MTBHQ, sold by PEP under the trade name Ennelox TP50V) . As pigment, 13.50 wt.-% yellow pigment (yellow sunbrite 2752121 by SUN Chemical) and 0.2 wt.-% orange pigment (orange irgalithe F2G) were included into said ink.

### Example 2: Preparation of a magenta ink

45.00 wt.-% of a vegetable ester (9-octadecenoic acid methyl ester, sold by Novance under the trade name Estorob 926.65) and 55 wt.-% of a phenolic-modified rosin ester (Bremapal VP 1638 by Kraemer) were mixed each other at 180°C for 45 min (to dissolve the rosin ester in the diluent -vegetable ester-) in order to obtain a varnish for the inks of the present invention.

66.50 wt.-% of said varnish were mixed at ambient temperature with additional 11.60 wt.-% of the above vegetable ester (9-octadecenoic acid methyl ester, sold by Novance under the trade name Estorob 926.65), 0.50 wt.-% of the drier cobalt octoate (10%, sold by Ingfer Filt & Minerals), 0.90 wt.-% of the drier manganese octoate (10%, sold by Ingfer Filt & Minerals), and 1.00 wt.-% of the anti-oxidant mono-t-butylhydroquinone (MTBHQ, sold by PEP under the trade name Ennelox TP50V) . As pigment, 19.50 wt.-% magenta pigment (irgalite SMA by Ciba) was included into said ink.

### Example 3: Preparation of a cyan ink

45.00 wt.-% of a vegetable ester (9-octadecenoic acid methyl ester, sold by Novance under the trade name Estorob 926.65) and 55 wt.-% of a phenolic-modified rosin ester (Bremapal VP 1638 by Kraemer) were mixed each other at 180°C for 45 min (to dissolve the rosin ester in the diluent -vegetable ester-) in order to obtain a varnish for the inks of the present invention.

69.50 wt.-% of said varnish were mixed at ambient temperature with additional 9.60 wt.-% of the above vegetable ester (9-octadecenoic acid methyl ester, sold by Novance under the trade name Estorob 926.65), 0.50 wt.-% of the drier cobalt octoate (10%, sold by Ingfer Filt & Minerals), 0.90 wt.-% of the drier manganese octoate (10%, sold by Ingfer Filt & Minerals), and 1.00 wt.-% of the anti-oxidant mono-t-butylhydroquinone (MTBHQ, sold by PEP under the trade name Ennelox TP50V) . As pigment, 18.50 wt.-% cyan pigment (irgalite NGA by Ciba) was included into said ink.

Example 4: Preparation of a black ink

45.00 wt.-% of a vegetable ester (9-octadecenoic acid methyl ester, sold by Novance under the trade name Estorob 926.65) and 55 wt.-% of a phenolic-modified rosin ester (Bremapal VP 1638 by Kraemer) were mixed each other at 180°C for 45 min (to dissolve the rosin ester in the diluent -vegetable ester-) in order to obtain a varnish for the inks of the present invention.

59.50 wt.-% of said varnish were mixed at ambient temperature with additional 8.40 wt.-% of the above vegetable ester (9-octadecenoic acid methyl ester, sold by Novance under the trade name Estorob 926.65), 0.50 wt.-% of the drier cobalt octoate (10%, sold by Ingfer Filt & Minerals), 0.90 wt.-% of the drier manganese octoate (10%, sold by Ingfer Filt & Minerals), and 1.00 wt.-% of the anti-oxidant mono-t-butylhydroquinone (MTBHQ, sold by PEP under the trade name Ennelox TP50V) . As pigment, 11.50 wt.-% Printex black 300 (Degussa), 7.70 wt.-% Special black 250 (Degussa) and 10.50 wt.-% Reflex blue A5H-R31 (Clariant) were included into said ink.

Comparative examples 1-4

As comparative examples, the commercially available inks of the TEMPO MAX series (here I need the supplier and if possible the composition, especially which binder and which solvent) were used. Comparative example 1 was a yellow ink of the TEMPO MAX series. Comparative example 2 was a magenta ink of the TEMPO MAX series. Comparative example 3 was a cyan ink of the TEMPO MAX series. Comparative example 4 was a black ink of the TEMPO MAX series. The Tempo Max series is sold by Siegwerk (versatile series for packaging application). The binder of said ink is composed of approx. 43% modified phenolic rosin ester, approx 39% mineral distillate, approx 18% linseed oil.

The composition of the ink is composed of the binder described above, 5-15% alkyde resin, pigments, mineral distillates for viscosity adjustment, driers, antioxidant, and wax.

Results

a) Setting speed ratio

The ink films were printed with the loads indicated below in table 1 on a substrate (Invercoat G-coated paper, 240 g/m2, from INAPA group (Iggesund paperboard)) such that a load between 1.8 and 2.0 $g/m^2$ was obtained. Slight deviations from said load were accepted. The load of the ink layer was calculated as follows:

$$\text{Load of ink layer} = \frac{(\text{weight of inking roller before printing}) - (\text{weight of inking roller after printing})}{\text{Area of the surface of the printed layer}}$$

The printing conditions were as follows:

Printing pressure at unit 1 (metal form): 400 N
Printing pressure at unit 2 (metal form): 400 N
Printing speed: 0.5 m/s
Thermostat setting: 30°C
Distributing time: 30 s

The inks were printed on a prufbau machine (lab printing device). The parameters described before were the parameters of the prufbau equipment to conduct the test.

Immediately after printing, the chronometer was started and the initial optical density was measured with a densitometer. The printed substrate was put in front of the counter print pressure, and a second substrate of the same kind was put onto the printed layer. After 20 s, pressure was applied. Simultaneously, after 20 s, 30 s, and 40 s, the optical density of the printed layer was measured with a densitometer

The setting speed ratio was calculated as follows:

$$\text{setting speed ratio } (\%) = \frac{\text{optical density of the ink measured 20s after printing} \cdot 100}{\text{initial optical density of the ink measured immediately after printing}}$$

The lower the setting speed ratio, the faster is the setting speed of the ink. Results are shown below in table 1.

**Table 1: Results**

|  | Example 1 | Example 2 | Example 3 | Example 4 | Comparative example 2 | Comparative example 3 |
|---|---|---|---|---|---|---|
| Load of the print (g/m²) | 1.8 | 1.9 | 2.0 | 2.0 | 2.0 | 2.0 |
| Initial optical density | 1.78 | 2.42 | 2.53 | 2.81 | 2.36 | 2.45 |
| Optical density after 20 s | 0.17 | 0.08 | 0.25 | 0.06 | 1.0 | 1.0 |
| Setting speed ratio | 10% | 3% | 10% | 2% | 42% | 42% |

It can be seen that the inks of the present invention show a significantly lower setting speed ratio than the inks of the prior art.

b) Contact angle

Contact angle measurements were performed with a contact angle goniometer which permits measurements at room temperature in ambient atmosphere. A thin layer of ink was applied on the surface of a North gauge (sheen gauge from Sheen instruments LTD from Labomats with graduations from 5 to 10 = 50 to 0 $\mu$m). The device was used in graduations of 6 and 6.5, so that the ink layer had a thickness of 35 to 40 $\mu$m.

A small droplet of TMPTA was deposited onto the surface immediately after printing the ink layer. Said droplet had a weight between 0.0065 and 0.0085 g (which in consideration of the density of TMPTA of 1.11 g/cm³ corresponds to a volume between 0.0058 and 0.0077 cm³). The chronometer was started immediately after the droplet was deposited onto the surface of the ink layer. The contact angle was read directly on the graduated goniometer scale after 20 s. The test was performed 4 times for each ink in order to verify results. An average of 4 measurements differing at most 2° from each other was taken into consideration. Results are shown below in table 2.

**Table 2: Results**

|  | Contact angle after 20 s (°) |
|---|---|
| Example 1 | 20.75 |
| Example 2 | 21 |
| Example 3 | 21 |
| Example 4 | 23 |
| Comparative example 1 | 30 |
| Comparative example 2 | 31.5 |
| Comparative example 3 | 33 |
| Comparative example 4 | 31 |

Table 2 shows that the inks of the present invention exhibited a significantly lower contact angle value 20 s after printing than the conventional inks. The conventional inks failed to satisfy the contact angle requirements of below 28° according to the present invention.

c) Gloss measurement

For gloss measurements, prints were applied onto a substrate (Invercoat G-coated paper, 240 $g/m^2$, from INAPA group (Iggesund paperboard)) at a load of i) 1.5-1.6 $g/m^2$ and ii) 1.9-2.0 $g/m^2$. Directly after printing, a conventional UV varnish used in the art for in-line varnishing on conventional inks was applied in-line using an automatic hand-coater (K control coater from Erichsen, coating speed on graduation 7, with the hand-coater number 0 (= 4 $g/cm^3$).

After varnishing, the product was dried with a UV drier (lamp power 160 W/cm) at 30 m/s. Gloss measurements were made at a point T0 (immediately after drying) and at a point T24 (after a drying period of 24 h). The results are shown in table 3.

**Table 3: Results**

| Example | Print load ($g/m^2$) | Gloss at T0 | Gloss at T24 |
|---|---|---|---|
| Example 1 | 1.5-1.6 | 91.6 | 80.9 |
| | 1.9-2.0 | 83.7 | 71.2 |
| Example 2 | 1.5-1.6 | 89.8 | 81.6 |
| | 1.9-2.0 | 79.4 | 64.4 |
| Example 3 | 1.5-1.6 | 88.5 | 78.1 |
| | 1.9-2.0 | 82.2 | 66 |
| Example 4 | 1.5-1.6 | 85.3 | 70.9 |
| | 1.9-2.0 | 82.5 | 64 |

| Example | Print load ($g/m^2$) | Gloss at T0 | Gloss at T24 |
|---|---|---|---|
| Comparative Example 1 | 1.5-1.6 | 87 | 56.7 |
| | 1.9-2.0 | 84.1 | 41.4 |
| Comparative Example 2 | 1.5-1.6 | 86.7 | 58.5 |
| | 1.9-2.0 | 83.3 | 44 |
| Comparative Example 3 | 1.5-1.6 | 83.7 | 44.7 |
| | 1.9-2.0 | 79.3 | 39.7 |
| Comparative Example 4 | 1.5-1.6 | 78.1 | 35.2 |
| | 1.9-2.0 | 77.2 | 27.7 |

**Claims**

1. Use of a traditional offset ink in an in-line varnishing process, said ink having a setting speed ratio of lower than 40%, and a contact angle of lower than 28°, in an in-line varnishing process for manufacturing an article.

2. Use according to claim 1, wherein said ink comprises a phenolic-modified rosin ester, a vegetable ester as a solvent, an organic pigment, a drier and optionally additives, in an in-line varnishing process for manufacturing an article.

3. Use according to claim 1 or 2, wherein said vegetable ester is an ester of rapeseed oil.

4. Use according to any of claims 1 to 3, wherein said drier is a metal octoate selected from the group consisting of cobalt octoate and manganese octoate, or a mixture thereof.

5. Use according to any of claims 1 to 4, wherein said ink comprises 65 to 90 wt.-% of a combination of said resin and said vegetable ester and 10 to 35 wt.-% of said pigment.

6. Printed article comprising a substrate, at least one ink layer of a traditional offset ink as defined in any one of claims 1 to 5 which is provided on at least one surface of said substrate, and a lacquer layer being provided on each of said ink layers.

7. Printed article according to claim 6, **characterised in that** the substrate is a board package.

8. Process for manufacturing an article according to claim 6 or 7 in an in-line varnishing process, said process comprising the steps of:

a) applying a traditional offset ink according to any one of claims 1 to 5 on at least one surface of a substrate, preferably a carton board, by means of an offset-printing process,
b) applying onto the wet ink layer of said offset ink obtained in step a) a lacquer layer forming composition,
c) curing said lacquer layer obtained in step b) by means of UV radiation.

9. Process according to claim 8, wherein the lacquer layer is applied in step b) by a method selected from the group consisting of a varnishing unit having preferably anilox rollers, roller coating, a coating head, a dry-offset method either via the damping system or via a printing plate or by means of lithography of letterpress, either by using one printing unit or by utilising in-line end-of-the press coating heads.

10. Process according to claim 8 or 9, wherein the lacquer forming composition is a UV-curable varnish composition comprising between 15 to 30 % by weight, preferably 18 to 25 % by weight, based on the weight of the entire UV-curable varnish composition, of a prepolymer; between 40 to 70 % by weight, preferably between 50 and 70 % by weight, based on the weight of the entire UV-curable varnish composition, of a diluent; between 1 to 10 % by weight, preferably between 2 and 7 % by weight, based on the weight of the entire UV-curable varnish composition, of a photoinitiator; between 1 to 10 % by weight, preferably between 5 to 10 % by weight, based on the weight of the entire UV-curable varnish composition, of a co-initiator; the balance being additives such as surfactants or perfumes.

| | European Patent Office | EUROPEAN SEARCH REPORT | Application Number EP 06 12 6311 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/054103 A1 (SATO KOUJI [JP] ET AL) 20 March 2003 (2003-03-20) * paragraph [0006] * * paragraph [0010] * * paragraph [0013] - paragraph [0023] * * paragraph [0037] - paragraph [0039] * * paragraph [0059] * * paragraph [0072] * * paragraph [0079] - paragraph [0090] * ----- | 1-10 | INV. B41M7/00 B41M7/02 C09D11/02 C09D11/10 |
| D,A | EP 1 333 073 A (SIPCA HOLDING S A [CH]) 6 August 2003 (2003-08-06) | 1-5 | |
| Y | * paragraph [0003] - paragraph [0009] * * paragraph [0017] - paragraph [0021] * * paragraph [0037] * * paragraph [0042] * * paragraph [0062] * * paragraph [0071] * ----- | 6-10 | |
| Y | US 5 178 672 A (MILLER MICHAEL J [CA]) 12 January 1993 (1993-01-12) * claims 1,12 * * column 4, line 19 - line 24 * ----- | 6-10 | TECHNICAL FIELDS SEARCHED (IPC) B41M C09D |

The present search report has been drawn up for all claims

| Place of search | Date of completion of the search | Examiner |
|---|---|---|
| The Hague | 1 June 2007 | MATTHIJSSEN, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 6311

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2007

| Patent document cited in search report | | Publication date | Patent family member(s) | | Publication date |
|---|---|---|---|---|---|
| US 2003054103 | A1 | 20-03-2003 | JP 3876647 B2 | | 07-02-2007 |
| | | | JP 2002338848 A | | 27-11-2002 |
| EP 1333073 | A | 06-08-2003 | NONE | | |
| US 5178672 | A | 12-01-1993 | CA 2043914 A1 | | 09-10-1992 |

For more details about this annex : see Official Journal of the European Patent Office, No. 12/82

**EP 1 935 662 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1333073 A

- US 5178672 A

**Non-patent literature cited in the description**

- The Printing ink manual. Blueprint, 1993, 15-33

- The Printing ink manual. Blueprint, 1993, 636-677